(19) Europäisches Patentamt
European Patent Office
Office européen des brevets

(11) EP 2 568 623 A1

(12) EUROPEAN PATENT APPLICATION

(43) Date of publication:
13.03.2013 Bulletin 2013/11

(51) Int Cl.:
*H04B 7/08* (2006.01)

(21) Application number: 12157495.8

(22) Date of filing: 29.02.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 07.09.2011 JP 2011195109

(71) Applicant: Alps Electric Co., Ltd.
Tokyo 145-8501 (JP)

(72) Inventor: Kitada, Kazutoshi
Tokyo 145-8501 (JP)

(74) Representative: Klunker . Schmitt-Nilson . Hirsch
Destouchesstraße 68
80796 München (DE)

(54) **Vehicle-mounted receiving apparatus**

(57) A vehicle-mounted receiving apparatus (1) includes a plurality of reception systems (10) installed to correspond to a plurality of antennas installed in a vehicle; a demodulation processing circuit (20) demodulating and synthesizing reception signals received through the plurality of reception systems (10) to output reception data; and a calculation section (60) setting weighting coefficients for determining a required number of reception systems to correspond to reception conditions indicated by a plurality of influencing factors that are predetermined to affect reception quality for the respective influencing factors, determining the respective weighting coefficients from the reception conditions indicated by the respective influencing factors when the vehicle is in motion, and calculating the required number of reception systems in a current communication environment using the determined weighting coefficients.

## FIG. 1

EP 2 568 623 A1

**Description**

CLAIM OF PRIORITY

This application claims the benefit of Japanese Patent Application No. 2011-195109 filed on September 7, 2011, which is hereby incorporated by reference.

BACKGROUND OF THE INVENTION

1. Field of the Invention

The present invention relates to a vehicle-mounted receiving apparatus that can be applied to a diversity apparatus for receiving digital terrestrial television broadcasting signals.

2. Description of the Related Art

Recently, vehicle-mounted receiving apparatuses for receiving digital terrestrial broadcasting signals have been developed. In such a vehicle-mounted receiving apparatus, a plurality of reception systems, each including an antenna, an amplifier, and a tuner, are installed, reception data is generated through maximum ratio synthesis of reception signals output from the plurality of reception systems, and reproduction of the digital terrestrial broadcasting signal is performed on the basis of the generated reception data (for example, see JP-A-2010-161691).
In such a vehicle-mounted receiving apparatus, while a vehicle is stationary, less influence such as fading due to movement of the vehicle is exerted, and thus it is possible to obtain reception data having a desired reception quality even without combining the reception signals of all the reception systems. Accordingly, in the above-described vehicle-mounted receiving apparatus, while the vehicle is stationary, power supply to some reception systems is limited. As a result, in the above-described vehicle-mounted receiving apparatus, while the vehicle is stationary, it is possible to reduce power consumption when compared to a case where the power supply is maintained with respect to all the reception systems.

SUMMARY OF THE INVENTION

However, in the above-described vehicle-mounted receiving apparatus, while the vehicle is in motion, the power supply to the whole reception system is continuously maintained in order to obtain reception data of a desired reception quality, and thus power consumption may not be reduced.
It is desirable to provide a vehicle-mounted receiving apparatus that can reduce power consumption while maintaining the reception quality of reception data even when the vehicle is in motion.
In one aspect of the present invention, there is provided a vehicle-mounted receiving apparatus, which includes a plurality of reception systems installed to correspond to a plurality of antennas installed in a vehicle; a demodulation section demodulating and synthesizing reception signals received through the plurality of reception systems to output reception data; and a calculation section setting weighting coefficients for determining a required number of reception systems to correspond to reception conditions indicated by a plurality of influencing factors that are predetermined to affect reception quality for each of the respective influencing factors, determining the respective weighting coefficients from the reception conditions indicated by the respective influencing factors when the vehicle is in motion, and calculating the required number of reception systems in a current communication environment using the determined weighting coefficients.
According to this configuration, the plurality of influencing factors that affect the reception quality are predetermined, and the weighting coefficients for determining the required number of reception systems to correspond to the reception conditions indicated by the influencing factors are set for the respective influencing factors. Further, the respective weighting coefficients are determined from the reception conditions indicated by the respective influencing factors when the vehicle is in motion, and the required number of reception systems is calculated in the current communication environment using the determined weighting coefficients. Accordingly, even in the case where the communication environment varies from hour to hour when the vehicle is in motion, it is possible to continue supplying power to the required reception systems the number of which corresponds to the current communication environment, and thus it is possible to reduce the power consumption while maintaining the reception quality of the reception data.
The vehicle-mounted receiving apparatus according to the aspect of the present invention may further include a power control section limiting supplying the power to the reception systems the number of which is obtained by subtracting the required number of reception systems calculated by the calculation section from the total number of reception systems.

In the vehicle-mounted receiving apparatus according to the aspect of the present invention, the influencing factors may include the speed of the vehicle, a C/N (Carrier to Noise ratio) of the reception signals received through the reception systems, the electric field intensity of a reception signal received through the reception systems, and the number of multi-paths to the reception systems.

According to this configuration, as the influencing factors, the speed when the vehicle is in motion, the C/N and the electric field intensity of the reception signals in the respective reception systems, and the number of multi-paths estimated on the basis of the synthesis results of the reception signals in the respective reception systems are used. Accordingly, if the reception quality is liable to deteriorate, such as being behind the buildings or the like, even in a state where the speed of the vehicle is relatively low, it may be necessary to increase the required number of reception systems.

In the vehicle-mounted receiving apparatus according to the aspect of the present invention, the calculation section may calculate the required number of reception systems BR using

$$BR = n * (Wsp + Wmp + Wef + Wcn) / 4$$

wherein n denotes the total number of reception systems, Wsp denotes the weighting coefficient according to the speed, Wen denotes the weighting coefficient of the C/N detected as the reception conditions, Wef denotes the weighting coefficient of the electric field intensity detected as the reception conditions, and Wmp denotes the weighting coefficients of the multi-paths detected as the reception conditions.

In the vehicle-mounted receiving apparatus according to the aspect of the present invention, an amplifying circuit amplifying output signals from the respective antennas and a tuner converting the output signals from the amplifying circuit into intermediate frequency signals may be installed in the plurality of reception systems.

The vehicle-mounted receiving apparatus according to the aspect of the present invention may further include a decoding circuit decoding the reception data acquired through the demodulation and synthesis of the reception signals in the plurality of reception systems, and a reproduction device reproducing the reception data decoded by the decoding circuit, and the reproduction device may be installed in a rear seat of the vehicle.

According to the aspect of the present invention, it is possible to provide a vehicle-mounted receiving apparatus that can reduce power consumption while maintaining the reception quality of reception data even when the vehicle is in motion.

BRIEF DESCRIPTION OF THE DRAWINGS

Fig. 1 is a configuration diagram illustrating the configuration of a vehicle-mounted receiving apparatus according to an embodiment of the present invention;
Fig. 2 is a diagram illustrating weighting coefficients to the total number of reception systems according to an embodiment of the present invention;
Fig. 3 is a diagram illustrating the required number of reception systems according to an embodiment of the present invention; and
Fig. 4 is a flowchart illustrating an operation of calculating the required number of reception systems according to an embodiment of the present invention.

DESCRIPTION OF THE PREFERRED EMBODIMENTS

Hereinafter, preferred embodiments of the present invention will be described in detail with reference to the accompanying drawings. A vehicle-mounted receiving apparatus according to an embodiment of the present invention is a vehicle-mounted receiving apparatus that is mounted on a vehicle and receives a broadcasting signal such as a digital terrestrial television broadcasting signal or the like.

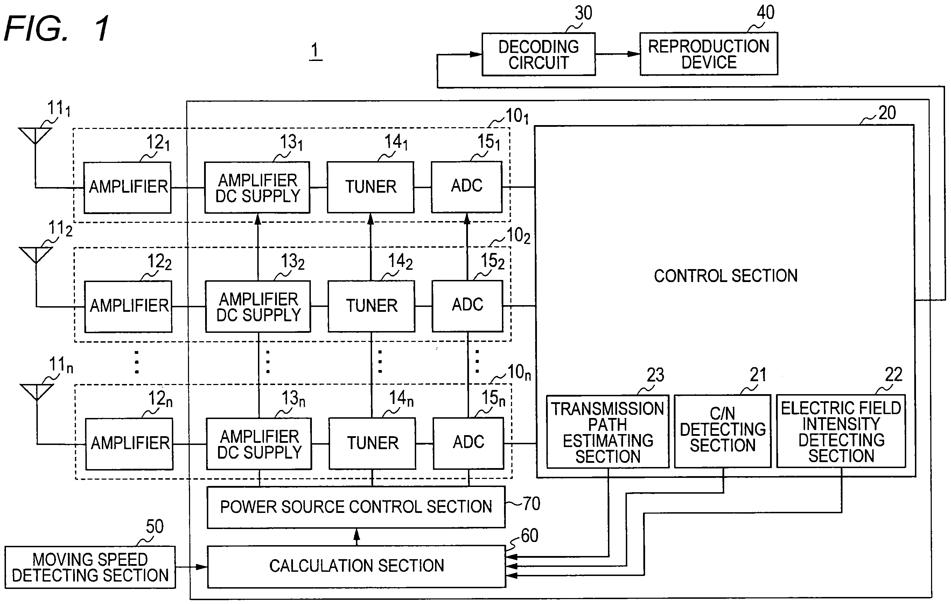

Fig. 1 is a configuration diagram illustrating the configuration of a vehicle-mounted receiving apparatus according to an embodiment of the present invention. As illustrated in Fig. 1, the vehicle-mounted receiving apparatus 1 includes a plurality of reception systems $10_1$ to $10_n$, a demodulation section 20 that demodulates and synthesizes reception signals received through the plurality of reception systems $10_1$ to $10_n$, a decoding circuit 30 that decodes reception data synthesized by the demodulation section 20, a reproduction device 40 that reproduces the reception data decoded by the decoding circuit 30, a speed detecting section 50 that detects a speed of a vehicle on which the vehicle-mounted receiving apparatus 1 is installed, a calculation section 60 that calculates a required number of reception systems of the plurality of reception systems $10_1$ to $10_n$, and a power control section 70 that controls the power supply to the plurality

of reception systems $10_1$ to $10_n$.

The plurality of reception systems $10_1$ to $10_n$ include amplifiers $12_1$ to $12_n$ (amplifying circuits) that amplify the reception signals output from antennas $11_1$ to $11_N$, amplifier DC supplies $13_1$ to $13_n$ that apply power supply voltage to wires connecting the amplifiers $12_1$ to $12_n$ and tuners $14_1$ to $14_n$, the tuners $14_1$ to $14_n$ that are connected to the amplifier DC supplies $13_1$ to $13_n$ to select the amplified signals amplified by the amplifiers $12_1$ to $12_n$ and to convert the selected signals into intermediate frequency signals, and an ADC (Analog-to-Digital Converters) $15_1$ to 15n that convert analog signals output from the tuners $14_1$ to 14n into digital signals.

The antennas $11_1$ to $11_N$ and the amplifiers $12_1$ to $12_n$ are arranged outside a case of the vehicle-mounted receiving apparatus 1. Even in the case where the amplifiers $12_1$ to $12_n$ are installed outside the case, the amplifiers $12_1$ to $12_n$ are directly connected to the amplifier DC supplies $13_1$ to $13_n$, and thus the power can be supplied to the amplifiers $12_1$ to $12_n$. Hereinafter, in the case where the plurality of reception systems $10_1$ to $10_n$ are not distinguished from one another, they are collectively referred to as the reception system 10.

The demodulation section 20 synthesizes the reception signals output from the respective ADC 15, and performs FFT (Fast Fourier Transform), multi-path cancellation, de-mapping, and the like, of the synthesized signal.

Further, the demodulation section 20 includes a C/N (Carrier to Noise Ratio) detecting section 21, an electric field intensity detecting section 22, and a transmission path estimating section 23. The C/N detecting section 21 detects the C/N of the reception signals received through the respective reception systems 10 to which the power is being supplied. The electric field intensity detecting section 22 detects the electric field intensity of the signals received through the respective reception systems 10 to which the power is being supplied. The transmission path estimating section 23 estimates the number of multi-paths based on the signals received from the respective reception systems 10 to which the power is being supplied.

The decoding circuit 30 is connected to the demodulation section 20, and decodes the reception data input from the demodulation section 20 to output the decoded data to the reproduction device 40. The reproduction device 40 is provided with a display or a speaker, and reproduces the reception data input from the decoding circuit 30. The reproduction device 40 may be installed, for example, on a rear seat so that it does not affect the vehicle driver.

The speed detection section 50 detects the speed while the vehicle is in motion. The speed detection section 50 detects the speed while the vehicle is in motion, for example, on the basis of a speedometer installed in the vehicle or an input signal from a navigation device.

The calculation section 60 calculates the required number of reception systems while the vehicle is in motion. Here, the required number of reception systems is the number of reception systems 10 to which the power is being supplied of the total number of the plurality of reception systems $10_1$ to $10_n$ (hereinafter referred to as "the total number of reception systems"). Specifically, the calculation section 60 determines the weighting coefficients according to the values of the influencing factors and calculates the required number of reception systems in the current communication environment using the determined weighting coefficients to meet the desired reception quality of the reception data during the traveling of the vehicle.

Here, the influencing factors are factors that affect the reception quality of the reception data, and a plurality of factors, for example, such as the speed detected by the speed detection section 50, the C/N (Carrier to Noise Ratio) detected by the C/N detection section 21, the electric field intensity detected by the electric field detection section 22, and the number of multi-paths estimated by the transmission path estimating section 23, are used as the influencing factors. By means of the values of these influencing factors, the reception conditions of the reception systems 10 to which the power is being supplied are indicated. Further, the above-described weighting coefficients are to determine the required number of reception systems that correspond to the reception conditions indicated by the respective influencing factors. The weighting coefficients of the respective influencing factors are determined according to the reception conditions indicated by the respective influencing factors.

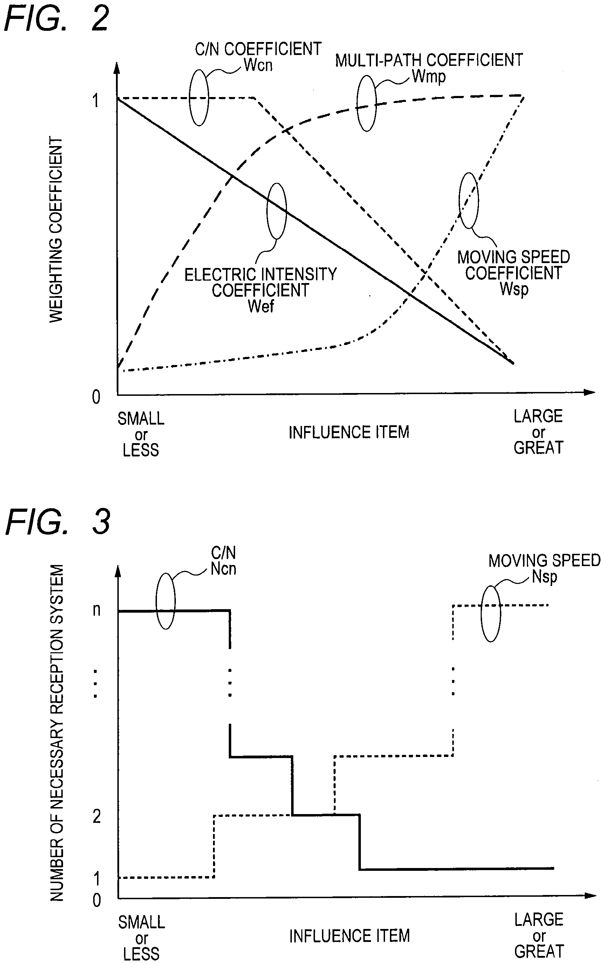

Fig. 2 is a diagram illustrating weighting coefficients according to the reception conditions indicated by the respective influencing factors. Further, in Fig. 2, as the influencing factors, for example, the speed detected by the speed detection section 50, the C/N detected by the C/N detection section 21, the electric field intensity detected by the electric field detection section 22, and the number of multi-paths estimated by the transmission path estimating section 23 are used. Further, since the C/N of the reception signal is detected for each reception system 10, an average value thereof may be used as the influencing factor in the C/N detection section 21. In the same manner, since the electric field intensity of the reception signal is detected for each reception system 10, an average value thereof may be used as the influencing factor in the electric field intensity detection section 22. Hereinafter, it is assumed that the C/N that is used as the influencing factor indicates the average value of the C/N of the reception signal for each reception system 10, and the electric field intensity that is used as the influencing factor indicates the average value of the electric field intensity of the reception signal for each reception system 10. Further, the horizontal axis in Fig. 2 represents the values of the respective influencing factors, and the vertical axis represents the weighting coefficient for each influencing factor.

As shown in Fig. 2, as the speed is relatively higher as the influencing factor, the weighting coefficient Wsp according to the speed (hereinafter referred to as "the speed coefficient") is set to be larger. This is because as the speed becomes higher, the influence such as fading or the like is liable to be exerted, and thus it is necessary to increase the number of reception systems. Further, as shown in Fig. 2, if the speed is equal to or lower than a predetermined value, the speed coefficient Wsp may be slowly increased, while if the speed exceeds the predetermined value, the speed coefficient Wsp may be rapidly increased. This is because if the speed is equal to or lower than the predetermined value, the influence such as fading or the like is not greatly changed.

Further, as the number of multi-paths is relatively increased as the influencing factor, the weighting coefficient according to the number of multi-paths (hereinafter referred to as "the multi-path coefficient") Wmp is set to be larger. This is because as the number of multi-paths is increased, the reception condition is deteriorated due to inter-symbol interference, and thus it is necessary to increase the number of reception systems. Further, as shown in Fig. 2, if the number of multi-paths is equal to or smaller than a predetermined value, the multi-path coefficient Wmp may be rapidly increased, while if the number of multi-paths exceeds the predetermined value, the multi-path coefficient Wmp may be slowly increased. This is because if the number of multi-paths exceeds the predetermined value, the influence on the reception conditions is not greatly changed.

Further, as the C/N is relatively higher, the weighting coefficient (hereinafter referred to as the "C/N coefficient") Wcn according to the C/N is set to be smaller. This is because as the C/N becomes higher, the reception condition becomes better, and thus it is possible to reduce the number of reception systems. Further, as shown in Fig. 2, if the C/N is equal to or lower than a predetermined value, the C/N coefficient Wcn becomes constant (for example, 1), while if the C/N exceeds the predetermined value, the C/N coefficient Wcn may be slowly reduced. This is because if the C/N is equal to or lower than the predetermined value, the desired reception conditions are not satisfied, and thus it is necessary to maintain the number of reception systems.

Further, as the electric field intensity is relatively larger, the weighting coefficient (hereinafter referred to as the "electric field intensity coefficient") Wef according to the electric field intensity is set to be smaller. This is because that as the electric field intensity becomes larger, the reception conditions become better, and thus it is possible to reduce the number of reception systems.

As described above, the calculation section 60 determines the weighting coefficients according to the reception conditions of the respective influencing factors, multiplies the total number of reception systems by the determined weighting coefficients, and calculates the required number of reception systems for the respective influencing factors.

Fig. 3 is a diagram illustrating the required number of reception systems for the respective influencing factors. Further, the horizontal axis in Fig. 3 represents the values of the respective influencing factors, and the vertical axis represents the required number of reception systems for each influencing factor. Further, in Fig. 3, if the calculated required number of reception systems has a decimal point, a rounded-up value is shown.

As shown in Fig. 3, as the speed is relatively higher as the influencing factor, the speed coefficient Wsp is set to be larger (see Fig. 2), and thus the required number of reception systems Nsp according to the speed becomes larger. For example, if the speed is x, as shown in FIG. 2, the speed coefficient Wsp is set to about 0.2, and thus the required number of reception systems Nsp according to the speed (here, x) becomes 0.2 n that is obtained by multiplying the speed coefficient Ws by the total number of reception systems n. Further, although not illustrated, in the same manner as the required number of reception systems Nsp according to the speed, as the number of multi-paths becomes relatively larger, even the required number of reception systems Nmp according to the number of multi-paths becomes larger.

Further, as the C/N coefficient is relatively larger, the C/N coefficient Wcn is set to be smaller (see Fig. 2), and thus the required number of reception systems Ncn according to the C/N becomes smaller. Although not illustrated, in the same manner as the required number of reception systems Ncn according to the C/N, as the electric field intensity becomes relatively larger, even the required number of reception systems Nef according to the electric field intensity becomes smaller.

As described above, the calculation section 60 multiplies the total number of reception systems n by the weighting coefficients according to the reception conditions indicated by the respective influencing factors, and calculates the required number of reception systems for the respective influencing factors. Further, the calculation section 60 divides the required number of reception systems for the calculated influencing factors by the number of influencing factors, and calculates the required number of reception systems during the traveling of the vehicle.

For example, the required number of reception systems BR is calculated through the following equation (1) on the assumption that the total number of reception systems is n, the speed coefficient is Wsp, the C/N coefficient is Wcn, the electric field intensity coefficient is Wef, the number of multi-paths is Wmp, and the number of influencing factors is Ninf (here, 4).

$$BR=(n*Wsp+n*Wcn+n*Wef+n*Wmp)/Ninf \quad \text{...... (1)}$$

On the other hand, the required number of reception systems BR may be calculated through the following equation (2) on the assumption that the total number of reception systems is n, the speed coefficient is Wsp, the C/N coefficient is Wen, the electric field intensity coefficient is Wef, the number of multi-paths is Wmp, and the number of influencing factors is Ninf (here, 4).

$$BR=n*(Wsp+Wmp+Wef+Wcn)/Ninf \quad ......\ (2)$$

Further, in equations (1) and (2), the number of reception systems is an integer, and if the calculated required number of reception systems BR has a decimal point, it may be rounded up.

A power control section 70 limits supplying the power to the reception systems 10 the number of which is obtained by subtracting the required number of reception systems BR calculated by the calculation section 60 from the total number of reception systems N. Specifically, the power control section 70 determines the reception systems 10 to which the power supply is limited on the basis of the C/N in the respective reception systems 10 detected by the C/N detection section 21 or the electric field intensity in the respective reception systems 10 detected by the electric field intensity detection section 22. Further, when the power control section 70 limits supplying the power to the reception systems 10, it may completely intercept supplying the power to the corresponding reception systems 10, or may maintain the minimum required power supply even though it does not completely intercept the power supply.

For example, the power control section 70 may determine the reception systems, the number of which is obtained by subtracting the required number of reception systems BR from the total number of reception systems N, in order from the reception system 10 having the worst C/N, as the reception systems 10 to which the power supply is limited. Further, the power control section 70 may determine the reception systems 10, the number of which is obtained by subtracting the required number of reception systems BR from the total number of reception systems N, in order from the reception system 10 having the worst electric field intensity, as the reception systems 10 to which the power supply is limited. Further, the power control section 70 may determine the reception systems 10 to which the power supply is limited in consideration of both the C/N and the electric field intensity.

Further, the power control section 70 instructs the amplifier DC supply 13 of the determined reception systems 10 to limit supplying the power to the amplifier 12. Further, the power control section 70 limits supplying the power to the tuners 14 and the analog/digital converters 15 of the determined reception systems 10.

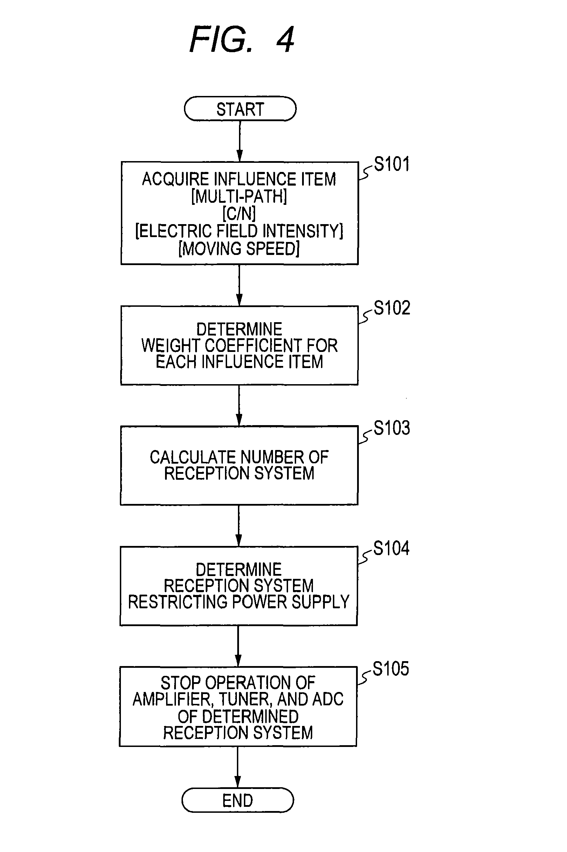

Next, the operation of the vehicle-mounted receiving apparatus 1 as configured above will be described. Fig. 4 is a flowchart illustrating the operation of the vehicle-mounted receiving apparatus 1. Further the flow illustrated in Fig. 4 may be repeated at predetermined intervals so as to temporally change the required number of reception systems. By dynamically changing the required number of reception systems, the power supply to the reception systems 10, the number of which is according to the vehicle communication environment, can be performed even in the case where the reception conditions are momentarily changed when the vehicle is in motion.

As illustrated in Fig. 4, the calculation section 60 acquires the reception conditions indicated by the respective influencing factors (step S101). As described above, the influencing factors are factors that affect the reception quality of the reception data that is acquired through synthesis of reception signals output from the plurality of reception systems, and for example, the influencing factors may be the speed of the vehicle, the number of multi-paths, the C/N and the electric field intensity of each reception system 10. Hereinafter, it is assumed that a detected value of the C/N in the C/N detection section 21, a detected value of the electric field intensity in the electric field intensity detection section 22, an estimated value of the number of multi-paths in the transmission path estimation section 23, and a detected value of the speed in the speed detection section 50 are acquired as the reception conditions indicated by the respective influencing factors.

The calculation section 60 determines the weighting coefficients according to the reception conditions indicated by the acquired influencing factors (step S102). As described above with reference to Fig. 2, the speed coefficient Wsp according to the speed detected by the speed detection section 50, the C/N coefficient Wcn according to the C/N detected by the C/N detection section 21, the electric field intensity coefficient Wef detected by the electric field intensity detection section 22, and the multi-path coefficient Wmp according to the number of multi-paths estimated by the transmission path estimation section 23 are determined.

The calculation section 60 calculates the required number of reception systems in the current communication environment using the weighting coefficients for the determined influencing factors (step S103). Specifically, the calculation section 60 multiplies the total number of reception systems by the weighting coefficient determined in step S102, and calculates the required number of reception systems. For example, the calculation section 60 may calculate the minimum number of reception systems using the above-described equation (1) or (2).

The power control section 70 determines the reception systems, to which the power supply is limited, on the basis of the C/N in the respective reception systems 10 detected by the C/N detection section 21 or the electric field intensity in the respective reception systems 10 detected by the electric field intensity detection section 22 (step S104).

Specifically, the power control section 70 may determine the reception systems, the number of which is obtained by subtracting the required number of reception systems from the total number of reception systems, in order from the reception system having the worst C/N, as the reception systems 10 to which the power supply is limited. Further, the power control section 70 may determine the reception systems, the number of which is obtained by subtracting the required number of reception systems from the total number of reception systems, in order from the reception system having the worst electric field intensity, as the reception systems 10 to which the power supply is limited. Further, the power control section 70 may determine the reception systems 10 to which the power supply is limited in consideration of both the C/N and the electric field intensity.

The power control section 70 stops the power supply to the amplifier 12, the tuner 14, and the analog-to-digital converter 15 of the reception system 10 determined in step S104 (step S105).

According to the vehicle-mounted receiving apparatus 1 according to this embodiment, the plurality of influencing factors that affect the reception quality are predetermined, and the weighting coefficients for determining the required number of reception systems to correspond to the reception conditions indicated by the influencing factors are set for the respective influencing factors. Further, the respective weighting coefficients are determined from the reception conditions indicated by the respective influencing factors when the vehicle is in motion, and the required number of reception systems is calculated in the current communication environment using the determined weighting coefficients. Accordingly, even in the case where the communication environment varies from hour to hour when the vehicle is in motion, it is possible to continue supplying power to the required number of reception systems 10, and thus it is possible to reduce the power consumption while maintaining the reception quality of the reception data.

Further, according to the vehicle-mounted receiving apparatus 1 according to this embodiment, as the influencing factors, the speed when the vehicle is in motion, the C/N and the electric field intensity of the reception signals in the respective reception systems 10, and the number of multi-paths in the respective reception systems 10 are used. Accordingly, if the reception quality is liable to deteriorate, such as shadows of buildings or the like, even in a state where the speed of the vehicle is relatively low, it is possible to increase the required number of reception systems. For example, if the total number of reception systems is 10, the speed coefficient Wsp becomes 0.2. In the case where the C/N coefficient is 1, the electric field intensity coefficient is 0.8, and the multi-path coefficient is 0.8 even if the required number of reception systems according to the speed becomes 2, the required number of reception systems becomes 7. As described above, by considering the reception states, such as the C/N, the electric field intensity, the number of multi-paths, and the like, in addition to the speed as the influencing factors, the required number of reception systems can be appropriately calculated.

Further, according to the vehicle-mounted receiving apparatus 1 according to this embodiment, the power supply limitations are determined in order from the reception system 10 having a bad C/N detected by the C/N detection section 21 and/or a bad electric field intensity detected by the electric field intensity detection section 22. Accordingly, even if the reception systems 10 to which the power is supplied are reduced to the total required number of reception systems, desired reception conditions of the reception data can be maintained.

The present invention is not limited to the above-described embodiments, and diverse modifications may be made. In the above-described embodiments, the arrangement, the size, and the like, of the respective configuration elements can be appropriately modified. In addition, the present invention can be appropriately modified and executed within the range that does not deviate from the gist of the invention.

## Claims

1. A vehicle-mounted receiving apparatus comprising:

   a plurality of reception systems installed to correspond to a plurality of antennas installed in a vehicle;
   a demodulation section demodulating and synthesizing reception signals received through the plurality of reception systems to output reception data; and
   a calculation section setting weighting coefficients for determining a required number of reception systems to correspond to reception conditions indicated by a plurality of influencing factors that are predetermined to affect reception quality for the respective influencing factors, determining the respective weighting coefficients from the reception conditions indicated by the respective influencing factors when the vehicle is in motion, and calculating the required number of reception systems in a current communication environment using the determined weighting coefficients.

2. The vehicle-mounted receiving apparatus according to claim 1, further comprising a power control section limiting supplying power to the reception systems the number of which is obtained by subtracting the required number of reception systems calculated by the calculation section from the total number of reception systems.

3. The vehicle-mounted receiving apparatus according to claim 1, wherein the influencing factors include a speed of the vehicle, a C/N (Carrier to Noise ratio) of the reception signals received through the reception systems, an electric field intensity of the reception signals received through the reception systems, and the number of multi-paths to the reception systems.

4. The vehicle-mounted receiving apparatus according to claim 3, wherein the calculation section calculates the required number of reception systems BR using

$$BR=n*(Wsp+Wmp+Wef+Wcn)/4$$

wherein n denotes the total number of reception systems, Wsp denotes the weighting coefficient according to the speed, Wcn denotes the weighting coefficient of the C/N detected as the reception conditions, Wef denotes the weighting coefficient of the electric field intensity detected as the reception conditions, and Wmp denotes the weighting coefficients of the multi-paths detected as the reception conditions.

5. The vehicle-mounted receiving apparatus according to any one of claims 1 to 4, wherein an amplifying circuit amplifying output signals from the respective antennas and a tuner converting the output signals from the amplifying circuit into intermediate frequency signals are installed in the plurality of reception systems.

6. The vehicle-mounted receiving apparatus according to any one of claims 1 to 5, further comprising;
   a decoding circuit decoding the reception data acquired through the demodulation and synthesis of the reception signals in the plurality of reception systems; and
   a reproduction device reproducing the reception data decoded by the decoding circuit,
   wherein the reproduction device is installed in a rear seat of the vehicle.

# FIG. 1

*FIG. 2*

*FIG. 3*

# FIG. 4

```
            ┌──────────────┐
            │    START     │
            └──────┬───────┘
                   │
                   ▼
  ┌────────────────────────────────┐  S101
  │     ACQUIRE INFLUENCE ITEM     │
  │         [MULTI-PATH]           │
  │            [C/N]               │
  │    [ELECTRIC FIELD INTENSITY]  │
  │        [MOVING SPEED]          │
  └────────────────┬───────────────┘
                   │
                   ▼
  ┌────────────────────────────────┐  S102
  │          DETERMINE             │
  │    WEIGHT COEFFICIENT FOR      │
  │       EACH INFLUENCE ITEM      │
  └────────────────┬───────────────┘
                   │
                   ▼
  ┌────────────────────────────────┐  S103
  │       CALCULATE NUMBER OF      │
  │        RECEPTION SYSTEM        │
  └────────────────┬───────────────┘
                   │
                   ▼
  ┌────────────────────────────────┐  S104
  │          DETERMINE             │
  │      RECEPTION SYSTEM          │
  │   RESTRICTING POWER SUPPLY     │
  └────────────────┬───────────────┘
                   │
                   ▼
  ┌────────────────────────────────┐  S105
  │      STOP OPERATION OF         │
  │  AMPLIFIER, TUNER, AND ADC     │
  │        OF DETERMINED           │
  │       RECEPTION SYSTEM         │
  └────────────────┬───────────────┘
                   │
                   ▼
            ┌──────────────┐
            │     END      │
            └──────────────┘
```

Europäisches Patentamt
European Patent Office
Office européen des brevets

# EUROPEAN SEARCH REPORT

**Application Number**

EP 12 15 7495

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2005/084379 A2 (QUALCOMM INC [US]; ULUPINAR FATIH [US]; BREIT GREGORY ALAN [US]; BANIS) 15 September 2005 (2005-09-15) * abstract * * paragraphs [0002], [0007], [0017], [0019] - [0020], [0023] - [0024], [0026] - [0027], [0029], [0031], [0033] - [0036], [0054], [0058], [0059], [0061] * * paragraphs [0063] - [0064], [0071] * ----- | 1-6 | INV. H04B7/08 |
| X | EP 1 460 780 A1 (SHARP KK [JP]) 22 September 2004 (2004-09-22) * abstract * * paragraphs [0031], [0037], [0038], [0072] - [0077] * ----- | 1-6 | |
| X | EP 1 912 349 A1 (NTT DOCOMO INC [JP]) 16 April 2008 (2008-04-16) * abstract * * paragraphs [0001], [0004] - [0009], [0014] - [0016], [0020], [0022], [0031], [0039] - [0040], [0043] - [0046], [0048], [0054], [0056] - [0057], [0060], [0065] * ----- | 1-6 | **TECHNICAL FIELDS SEARCHED (IPC)** H04B |
| A | US 2008/220819 A1 (BEN-ELI DAVID [IL]) 11 September 2008 (2008-09-11) * abstract * * paragraphs [0004] - [0006], [0008] - [0011], [0020], [0027] - [0036], [0042], [0045] - [0046], [0048], [0050] - [0051], [0056], [0061] - [0062], [0064], [0069] * ----- | 1-6 | |

The present search report has been drawn up for all claims

| Place of search | Date of completion of the search | Examiner |
|---|---|---|
| The Hague | 18 May 2012 | Ntogari, Georgia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 12 15 7495

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2012

| Patent document cited in search report | | Publication date | Patent family member(s) | | Publication date |
|---|---|---|---|---|---|
| WO 2005084379 | A2 | 15-09-2005 | AU | 2005218627 A1 | 15-09-2005 |
| | | | BR | PI0508417 A | 24-07-2007 |
| | | | CA | 2558474 A1 | 15-09-2005 |
| | | | CA | 2774219 A1 | 15-09-2005 |
| | | | CN | 1943134 A | 04-04-2007 |
| | | | CN | 1947356 A | 11-04-2007 |
| | | | CN | 101888265 A | 17-11-2010 |
| | | | EP | 1721395 A2 | 15-11-2006 |
| | | | JP | 4564050 B2 | 20-10-2010 |
| | | | JP | 2007527675 A | 27-09-2007 |
| | | | KR | 20060127245 A | 11-12-2006 |
| | | | RU | 2378759 C2 | 10-01-2010 |
| | | | US | 2005197080 A1 | 08-09-2005 |
| | | | US | 2010210235 A1 | 19-08-2010 |
| | | | WO | 2005084379 A2 | 15-09-2005 |
| EP 1460780 | A1 | 22-09-2004 | CN | 1531221 A | 22-09-2004 |
| | | | DE | 602004000153 D1 | 01-12-2005 |
| | | | EP | 1460780 A1 | 22-09-2004 |
| | | | JP | 2004282476 A | 07-10-2004 |
| | | | US | 2004198229 A1 | 07-10-2004 |
| EP 1912349 | A1 | 16-04-2008 | CN | 101176278 A | 07-05-2008 |
| | | | EP | 1912349 A1 | 16-04-2008 |
| | | | JP | 4667118 B2 | 06-04-2011 |
| | | | JP | 2006324816 A | 30-11-2006 |
| | | | KR | 20070122538 A | 31-12-2007 |
| | | | US | 2009233571 A1 | 17-09-2009 |
| | | | US | 2011275337 A1 | 10-11-2011 |
| | | | WO | 2006123634 A1 | 23-11-2006 |
| US 2008220819 | A1 | 11-09-2008 | EP | 2119040 A2 | 18-11-2009 |
| | | | US | 2008220819 A1 | 11-09-2008 |
| | | | WO | 2009027829 A2 | 05-03-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011195109 A

- JP 2010161691 A